(19) **Europäisches Patentamt / European Patent Office / Office européen des brevets**

(11) **EP 4 365 897 B1**

(12) **EUROPEAN PATENT SPECIFICATION**

(45) Date of publication and mention
of the grant of the patent:
**25.06.2025 Bulletin 2025/26**

(51) International Patent Classification (IPC):
**G10L 21/0272** (2013.01)   **G10L 25/30** (2013.01)
**G10L 21/0308** (2013.01)   **G06N 3/045** (2023.01)

(21) Application number: **22832403.4**

(22) Date of filing: **09.02.2022**

(52) Cooperative Patent Classification (CPC):
**G10L 25/30; G06N 3/0442; G06N 3/0455;
G10L 21/0272; G10L 21/0308**

(86) International application number:
**PCT/JP2022/005007**

(87) International publication number:
**WO 2023/276235 (05.01.2023 Gazette 2023/01)**

(54) **COMPUTER PROGRAM, INFORMATION PROCESSING METHOD AND INFORMATION PROCESSING DEVICE**

COMPUTERPROGRAMM, INFORMATIONSVERARBEITUNGSVERFAHREN UND INFORMATIONSVERARBEITUNGSVORRICHTUNG

PROGRAMME D'ORDINATEUR, PROCÉDÉ DE TRAITEMENT D'INFORMATIONS ET DISPOSITIF DE TRAITEMENT D'INFORMATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.06.2021 JP 2021108134**

(43) Date of publication of application:
**08.05.2024 Bulletin 2024/19**

(73) Proprietor: **Sony Group Corporation
Tokyo 108-0075 (JP)**

(72) Inventors:
• **OSAKO, Keiichi**
  **Tokyo 108-0075 (JP)**
• **MITSUFUJI, Yuhki**
  **Tokyo 108-0075 (JP)**
• **SAWATA, Ryosuke**
  **Tokyo 108-0075 (JP)**

(74) Representative: **2SPL Patentanwälte PartG mbB
Landaubogen 3
81373 München (DE)**

(56) References cited:
WO-A1-2020/039571   JP-A- 2020 071 482
JP-A- 2020 134 657   JP-A- 2021 076 831
JP-A- H02 287 859   US-A1- 2019 066 713

• SAWATA RYOSUKE ET AL: "All For One And One For All: Improving Music Separation By Bridging Networks", ICASSP 2021 - 2021 IEEE INTERNATIONAL CONFERENCE ON ACOUSTICS, SPEECH AND SIGNAL PROCESSING (ICASSP), IEEE, 6 June 2021 (2021-06-06), pages 51 - 55, XP033954463, DOI: 10.1109/ICASSP39728.2021.9414044
• STOETER ET AL: "Open-Unmix for PyTorch", 31 May 2021 (2021-05-31), XP093171579, Retrieved from the Internet <URL:https://web.archive.org/web/20210531100225/https://github.com/sigsep/open-unmix-pytorch> [retrieved on 20240606]
• TAN KE ET AL: "Complex Spectral Mapping with a Convolutional Recurrent Network for Monaural Speech Enhancement", ICASSP 2019 - 2019 IEEE INTERNATIONAL CONFERENCE ON ACOUSTICS, SPEECH AND SIGNAL PROCESSING (ICASSP), IEEE, 12 May 2019 (2019-05-12), pages 6865 - 6869, XP033565413, DOI: 10.1109/ICASSP.2019.8682834

EP 4 365 897 B1

• WANG ZHONG-QIU; ROUX JONATHAN LE; HERSHEY JOHN R.: "Alternative Objective Functions for Deep Clustering", 2018 IEEE INTERNATIONAL CONFERENCE ON ACOUSTICS, SPEECH AND SIGNAL PROCESSING (ICASSP), IEEE, 15 April 2018 (2018-04-15), pages 686 - 690, XP033401818, DOI: 10.1109/ICASSP.2018.8462507

**Description**

TECHNICAL FIELD

The present disclosure relates to a program, an information processing method, a recording medium, and an information processing device.

BACKGROUND ART

A sound source separation technology of extracting a target sound source signal from a mixed sound signal containing a plurality of sound source signals is known. For example, Patent Document 1 discloses a sound source separation technology using a deep neural network (DNN).
The scientific publication "ALL FOR ONE AND ONE FOR ALL: IMPROVING MUSIC SEPARATION BY BRIDING NETWORKS" by Sawata et al., DOI: 10.1109/ICASSP39728.2021.9414044 describes music separation with DNNs.

CITATION LIST

PATENT DOCUMENT

Patent Document 1: WO 2018/047643

SUMMARY OF THE INVENTION

PROBLEMS TO BE SOLVED BY THE INVENTION

Techniques using the DNN achieve high sound source separation performance, but a large amount of operations such as multiplication and addition need to be performed. Furthermore, in the DNN that achieves high sound source separation performance, a larger number of coefficients are used, so that the capacity of a memory for storing the coefficients also needs to be increased.
It is therefore an object of the present disclosure to provide a program, an information processing method, a recording medium, and an information processing device that minimize the amount of operations while achieving sound source separation performance equal to or higher than a certain level.

SOLUTIONS TO PROBLEMS

According to a first aspect, the invention provides a program in accordance with independent claim 1. According to a second aspect, the invention provides an information processing method in accordance with independent claim 11. According to a third aspect, the invention provides an information processing system in accordance with independent claim 12. Further aspects are set forth in the dependent claims, the drawings, and the following description.

BRIEF DESCRIPTION OF DRAWINGS

Fig. 1 is a block diagram to be referred to in describing a technology related to the present disclosure.
Fig. 2 is a block diagram to be referred to in describing the technology related to the present disclosure.
Fig. 3 is a block diagram to be referred to in describing the technology related to the present disclosure.
Fig. 4 is a block diagram illustrating a configuration example of an information processing device according to a first embodiment.
Fig. 5 is a flowchart illustrating a flow of processing performed by the information processing device according to the first embodiment.
Fig. 6 is a diagram to be referred to in describing an effect obtained by the first embodiment.
Fig. 7 is a block diagram illustrating a configuration example of an information processing device according to a second embodiment.
Fig. 8 is a flowchart illustrating a flow of processing performed by the information processing device according to the second embodiment.
Fig. 9 is a block diagram illustrating a configuration example of an information processing device according to a third embodiment.
Fig. 10 is a diagram for describing an example of an effect obtained by each embodiment.
Fig. 11 is a diagram for describing a modification.

MODE FOR CARRYING OUT THE INVENTION

Embodiments and the like of the present disclosure will be described below with reference to the drawings. Note that the description will be given in the following order.

<Technology related to the present disclosure>

<First embodiment>

<Second embodiment>

<Third embodiment>

<Modification>

The embodiments and the like described below are preferred specific examples of the present disclosure, and the contents of the present disclosure are not limited to these embodiments and the like.

<Technology related to the present disclosure>

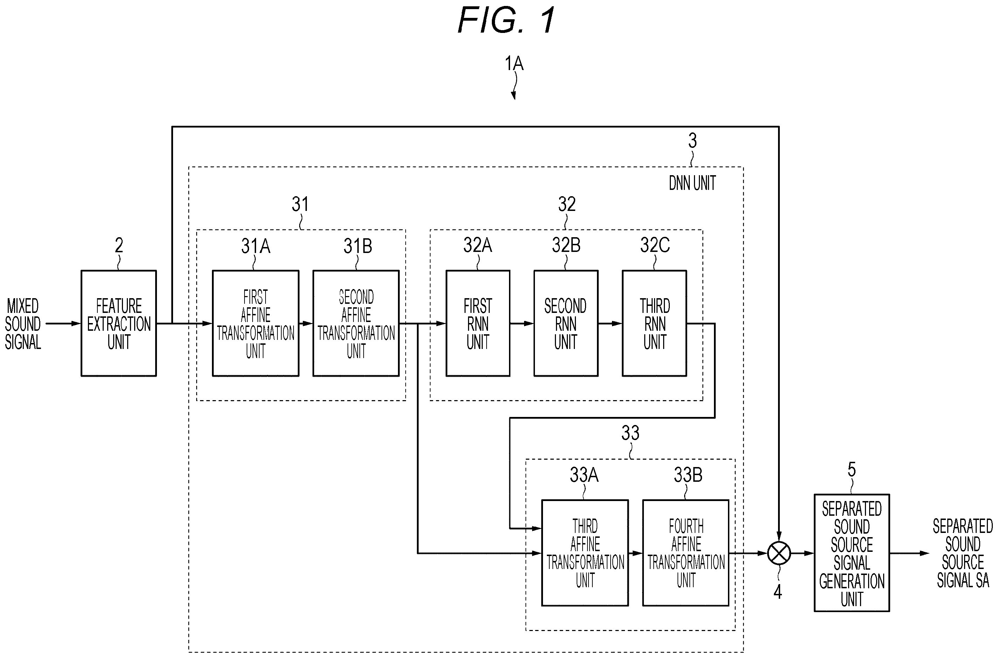

First, in order to facilitate understanding of the present disclosure, a technology related to the present disclosure will be described. Fig. 1 is a block diagram illustrating a configuration example of an information processing device (information processing device 1A) according to the technology related to the present disclosure. The information processing device 1A is a sound source separation device that separates a desired sound source signal from a mixed sound signal containing a plurality of sound source signals (for example, a vocal sound and each instrument sound constituting an accompaniment sound). Specifically, the information processing device 1A is incorporated into a smartphone, a personal computer, or an in-vehicle device. For example, the information processing device 1A is used to separate an accompaniment sound signal from a mixed sound signal stored in a medium such as a compact disc (CD) or a semiconductor memory or a mixed sound signal distributed over a network such as the Internet. The separated accompaniment sound signal is reproduced. A user sings along with the reproduction of the accompaniment sound signal. It is therefore possible for the user to easily perform karaoke without preparing the accompaniment sound signal itself. It goes without saying that the use of the information processing device 1A is not limited to karaoke. Text transcription processing or the like may be performed using the sound source separation result from the information processing device 1A. Note that the sound source separation processing performed by the information processing device 1A may be performed as online (real-time) processing or offline (batch) processing.

As illustrated in Fig. 1, the information processing device 1A includes, roughly speaking, a feature extraction unit 2, a DNN unit 3, a multiplication unit 4 that is an example of an operation unit, and a separated sound source signal generation unit 5. The mixed sound signal is input to the feature extraction unit 2. Furthermore, the sound source signal (hereinafter, also referred to as separated sound source signal SA as appropriate) separated from the mixed sound signal is output from the separated sound source signal generation unit 5. As described above, the mixed sound signal is a signal containing a mixture of a plurality of sound source signals, and is a signal digitized by pulse code modulation (PCM) or the like. A source of the mixed sound signal may be any source such as a recording medium or a server device on a network.

The feature extraction unit 2 performs a feature extraction process of extracting a feature of the mixed sound signal. For example, the feature extraction unit 2 equally splits data of the mixed sound signal into sections (frames) of a predetermined length, and performs frequency conversion (for example, a short-time Fourier transform) on each frame after the split. Such a frequency conversion process yields a time-series signal of a frequency spectrum. For example, in a case where the frame length is 2048, the frequency conversion length is also 2048, and conversion into 1025 frequency spectra below the alias frequency is performed. That is, the process performed by the feature extraction unit 2 yields a frequency spectrum, specifically, a multidimensional vector (in this example, a vector having 1025 dimensions). The process result from the feature extraction unit 2 is supplied to the following DNN unit 3.

The DNN unit 3 generates sound source separation information for separating a predetermined sound source signal from the mixed sound signal. Specifically, the DNN 3 is an algorithm having a multi-layered structure based on a model of a human neural circuit (neural network) designed by machine learning to the generate sound source separation information.

The DNN unit 3 includes an encoder 31 that transforms the feature extracted from the mixed sound signal by the feature extraction unit 2, a sub-neural network unit 32 to which the process result from the encoder 31 is input, and a decoder 33 to which the process result from the encoder 31 and the process result from each sub-neural network unit 32 are input.

The encoder 31 includes one of a plurality of affine transformation unit. The affine transformation unit performs a process represented by the following expression (1):

$$y = f(Wx + b) \cdots (1),$$

where, x denotes is an input vector, y denotes an output vector, W denotes a weighting coefficient to be obtained, b denotes a bias coefficient, and f denotes a nonlinear function.

The values of W and b are numerical values obtained as a result of learning performed in advance using a large data set.

As the nonlinear function f, for example, a rectified linear unit (ReLU) function, a sigmoid function, or the like can be used.

In this example, the encoder 31 includes a first affine transformation unit 31A and a second affine transformation unit 31B. The number of affine transformation units included in the encoder 31 is appropriately set so as to achieve sound source separation performance equal to or higher than a certain level. The encoder 31 transforms the feature by reducing the size of the feature, for example. More specifically, the encoder 31 reduces the number of dimensions of the multidimensional vector.

The sub-neural network unit 32 is a neural network present in the DNN unit 3. As the sub-neural network unit 32, a recurrent neural network (RNN) that uses at least one of a temporally past process result or a temporally future process result obtained for current input. The future process result can be used in a case of batch processing. As the recurrent neural network, a neural network using a gated recurrent Unit (GRU) or a long short term memory (LSTM) as an algorithm can be used.

The sub-neural network unit 32 includes a first RNN unit 32A, a second RNN unit 32B, and a third RNN unit 32C. The number of RNN units included in the sub-neural network unit 32 is appropriately set so as to achieve sound source separation performance equal to or higher than a certain level. Parameters used by each RNN unit are different, and the parameters are stored in a read only memory (ROM) or a random access memory (RAM) (not illustrated) of each RNN unit. In the following description, in a case where there is no particular need to distinguish between the ROM and the RAM, the ROM and the RAM are referred to as memory cell as appropriate. The first RNN unit 32A, the second RNN unit 32B, and the third RNN unit 32C sequentially perform a process on the process result from the encoder 31.

The decoder 33 generates the sound source separation information on the basis of the process result from the encoder 31 and the process result from the sub-neural network unit 32. The decoder 33 includes, for example, a third affine transformation unit 33A and a fourth affine transformation unit 33B. The third affine transformation unit 33A connects the process result from the encoder 31, that is, the process result obtained by skipping the sub-neural network unit 32, and the output from the sub-neural network unit 32 (also referred to as skip connection). The fourth affine transformation unit 33B performs affine transformation represented by the above-described expression (1) on the process result from the third affine transformation unit 33A. As a result of the processes performed by the third and fourth affine transformation units 33A and 33B, the feature size reduced by the encoder 31 is restored, and a mask that is an example of the sound source separation information is obtained accordingly. The mask information is output from the DNN unit 3 and supplied to the multiplication unit 4.

The multiplication unit 4 multiplies the feature extracted by the feature extraction unit 2 by the mask supplied from the DNN unit 3. Multiplying the frequency spectrum by the mask allows a signal in the corresponding frequency band to be passed as it is (a predetermined numerical value in the mask = 1) or to be blocked (a predetermined numerical value in the mask = 0). That is, it can be said that the DNN unit 3 estimates a mask for passing only the frequency spectrum of the sound source that is to be separated and blocking the frequency spectrum of the sound source that is not to be separated.

The separated sound source signal generation unit 5 performs a process (for example, short-time inverse Fourier transform) of transforming the operation result from the multiplication unit 4 back to a time-axis signal. As a result, a desired sound source signal (sound source signal to be separated and time-axis signal) is generated. The separated sound source signal SA generated by the separated sound source signal generation unit 5 is used for application-specific purposes.

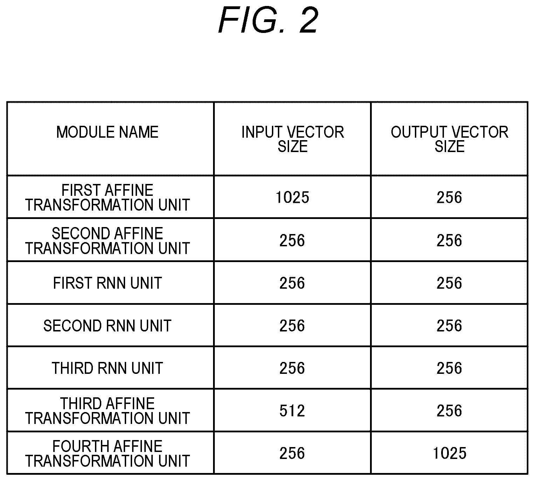

Fig. 2 illustrates examples of input/output sizes of each module constituting the DNN unit 3. A 1025-dimensional frequency spectrum is input to the first affine transformation unit 31A, and the first affine transformation unit 31A performs affine transformation on the input to output a 256-dimensional vector. The 256-dimensional frequency spectrum (output from the first affine transformation unit 31A) is input to the second affine transformation unit 31B, and the second affine transformation unit 31B performs affine transformation on the input to output a 256-dimensional vector. As described above, in the present embodiment, the size (number of dimensions) of the multidimensional vector input to the sub-neural network unit 32 is reduced by the first affine transformation unit 31A and the second affine transformation unit 31B. This allows an improvement in generalization ability of the DNN unit 3.

The first RNN unit 32A, the second RNN unit 32B, and the third RNN unit 32C receive, as input, a multidimensional vector with 256 dimensions and output a multidimensional vector with the same number of dimensions.

The third affine transformation unit 33A receives, as input, a 512-dimensional vector obtained by connecting the output from the second affine transformation unit 31B and the output from the third RNN unit 32C. Connecting the vector before the sub-neural network unit 32 performs the process allows an improvement in performance of the DNN unit 3. The third affine transformation unit 33A receives the 512-dimensional vector as input, and performs affine transformation on the input to output a 256-dimensional vector. The fourth affine transformation unit 33B receives a 256-dimensional vector as input, and performs affine transformation on the input to output a 1025-dimensional vector. The 1025-dimensional vector corresponds to the mask by which the multiplication unit 4 multiplies the frequency spectrum supplied from the feature extraction unit 2. Note that the number of connected modules constituting the DNN unit 3 and the vector size of each input/output are examples, and the effective configuration differs in a manner that depends on each data set.

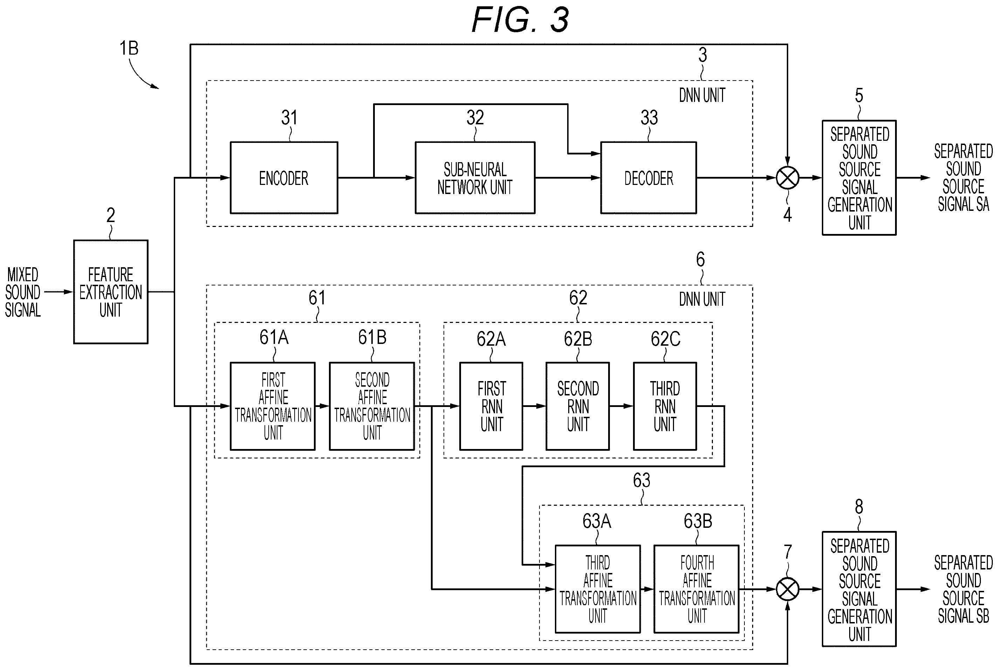

Fig. 3 is a block diagram illustrating a configuration example of another information processing device (information processing device 1B). The information processing device 1A is configured to separate one sound source signal from the mixed sound signal, but the information processing device 1B separates two sound source signals from the mixed sound signal. For example, the information processing device 1B separates the separated sound source signal SA and a separated sound source signal SB from the mixed sound signal.

As illustrated in Fig. 3, the information processing device 1B includes a DNN unit 6, a multiplication unit 7, and a separated sound source signal generation unit 8 in addition to the configuration of the information processing device 1A. The DNN unit 6 includes an encoder 61, a sub-neural network unit 62, and a decoder 63. The encoder 61 includes a first affine transformation unit 61A and a second affine transformation unit 61B. The sub-neural network unit 62 includes a first RNN unit 62A, a second RNN unit 62B, and a third RNN unit 62C. The decoder 63 includes a third affine transformation unit 63A and a fourth affine transformation unit 63B.

Roughly speaking, the flow of operation of the DNN unit 6 is substantially the same as of the DNN unit 3. That is, the DNN unit 6 performs a process similar to the process performed by the DNN unit 3 on the feature of the mixed sound signal extracted by the feature extraction unit 2. As a result, a mask for obtaining the separated sound source signal SB is generated. The multiplication unit 7 multiplies the feature of the mixed sound signal by the mask. The multiplication result is transformed into a time-axis signal by the separated sound source signal generation unit 8 to generate the separated sound source signal SB.

Note that the DNN 3 and the DNN unit 6 are individually trained. That is, even if the arrangement of the modules in each DNN unit is similar, the values of weighting coefficients and bias coefficients in the affine transformation units and the values of coefficients used in the RNN units are different, and such values are optimized for the sound source signal to be separated. As described above, when the number of sound source signals to be separated increases N-fold, the number of multiply-accumulate operations and the memory cell usage required for the DNN unit increase N-fold. Details of the present disclosure made in view of the above-described points will be described in more detail with reference to the embodiments.

<First embodiment>

[Configuration example of information processing device]

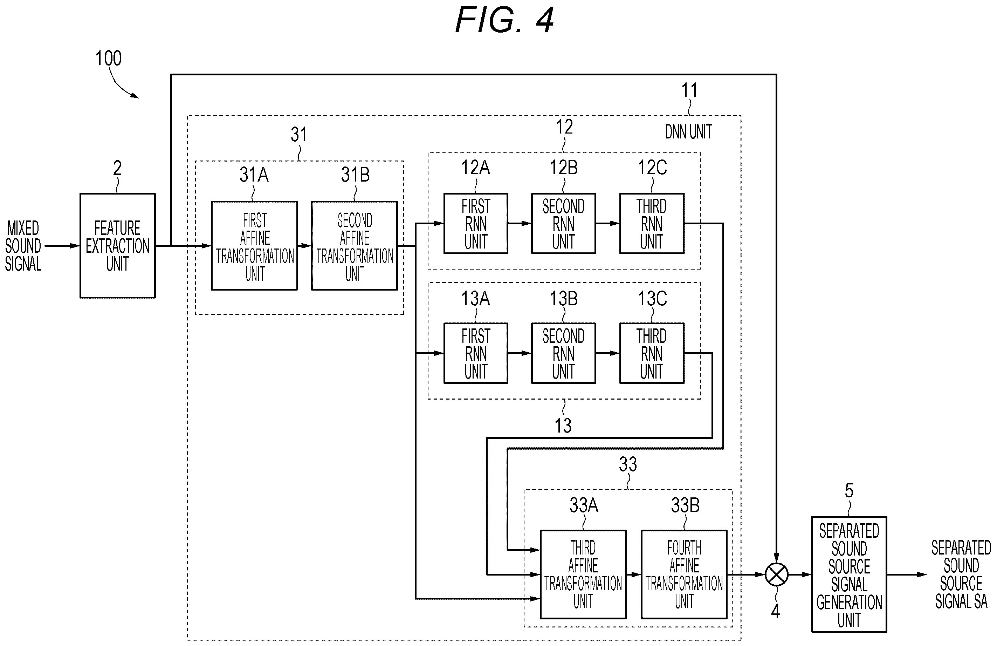

Fig. 4 is a block diagram illustrating a configuration example of an information processing device (information processing device 100) according to a first embodiment. Note that, among components included in the information processing device 100, components similar to those of the information processing device 1A or the information processing device 1B are denoted by the same reference numerals, and redundant description will be omitted as appropriate. Furthermore, the matters described for the information processing devices 1A and 1B are applicable to each embodiment unless otherwise specified.

The information processing device 100 includes a DNN unit 11 instead of the DNN unit **3.** The DNN unit 11 generates a mask for separating a predetermined sound source signal (for example, the separated sound source signal SA) from the mixed sound signal and outputting the predetermined sound source signal.

The DNN unit 11 includes the encoder 31 and the decoder 33 described above. The DNN unit 11 further includes a plurality of sub-neural network units, specifically, two sub-neural network units (sub-neural network units 12 and 13) arranged in parallel with each other. The sub-neural network unit 12 includes a first RNN unit 12A, a second RNN unit 12B, and a third RNN unit 12C. Furthermore, the sub-neural network unit 13 includes a first RNN unit 13A, a second RNN unit 13B, and a third RNN unit 13C. Each sub-neural network unit performs an RNN-based process on input given thereto.

The output from the encoder 31 is divided. In a case where a 256-dimensional vector is output from the encoder 31 (see Fig. 2), the number of dimensions of the vector is divided into two to generate a first vector with 128-dimensions and a second vector with 128-dimensions. Such a process is performed by the encoder 31, for example. The first vector is input to, for example, the sub-neural network unit 12, and the second vector is input to, for example, the sub-neural network unit 13. The sub-neural network unit 12 performs a process using the RNN on the first vector to output a 128-dimensional vector. Furthermore, the sub-neural network unit 13 performs a process using the RNN on the second vector to output a 128-dimensional vector.

Next, the third affine transformation unit 33A of the decoder 33 connects the 128-dimensional vector output from the sub-neural network unit 12, the 128-dimensional vector output from the sub-neural network unit 13, and the 256-dimensional vector output from the encoder 31, and performs affine transformation on the connected vectors. The other processing is similar to the processing performed by the information processing device 1A, so that redundant description will be omitted.

[Flow of processing]

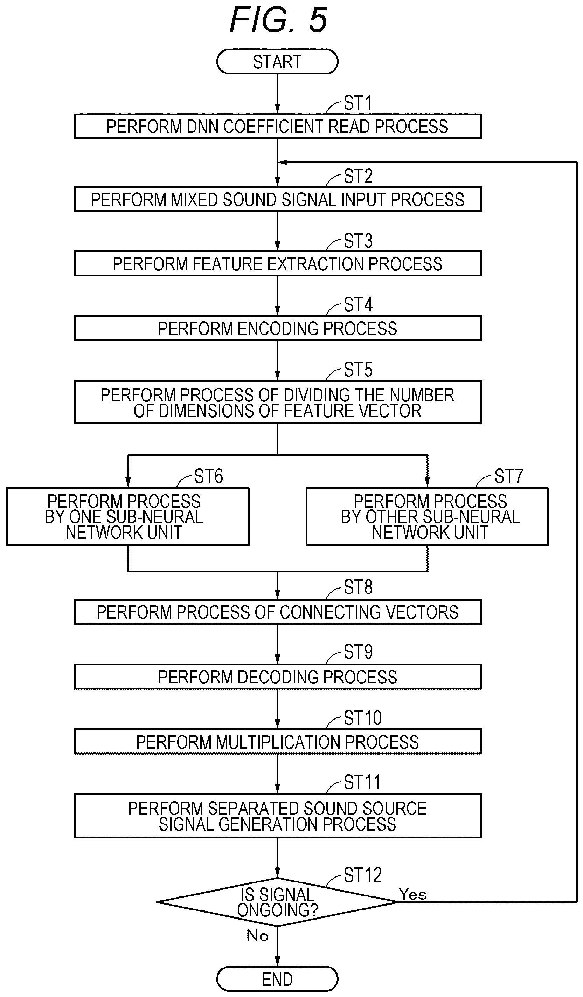

A flow of processing performed by the information processing device 100 will be described with reference to the flowchart illustrated in Fig. 5.

When the processing is started, each module constituting the DNN unit 3 reads coefficients stored in the ROM or the like (not illustrated) in step ST1. Then, the processing proceeds to step ST2.

In step ST2, the mixed sound signal is input to the information processing device 100. Then, the processing proceeds to step ST3.

In step ST3, the feature extraction unit 2 extracts a feature vector from the mixed sound signal. For example, a 1025-dimensional feature vector is input to the encoder 31 of the DNN unit 11. Then, the processing proceeds to step ST4.

In step ST4, the encoder 31, specifically, the first affine transformation unit 31A and the second affine transformation unit 31B, performs an encoding process. As a result of the process, for example, a 256-dimensional vector is output from the second affine transformation unit 31B. Then, the processing proceeds to step ST5.

In step ST5, the 256-dimensional vector is equally divided into two 128-dimensional vectors (first and second vectors). The first vector is input to the sub-neural network unit 12, and the second vector is input to the sub-neural network unit 13. Note that the process related to step ST5 may be included in the encoding process of step ST4. Then, the processing proceeds to step ST6 and step ST7.

In step ST6, the sub-neural network unit 12 performs a process using the first vector. Furthermore, in step ST7, the sub-neural network unit 13 performs a process using the second vector. Note that the processes related to steps ST6 and ST7 may be performed in parallel or sequentially. Then, the processing proceeds to step ST8.

In step ST8, a process of connecting vectors is performed. This process is performed by the decoder 33, for example. The third affine transformation unit 33A generates a 512-dimensional vector by connecting the 256-dimensional vector output from the second affine transformation unit 31B, the 128-dimensional vector output from the sub-neural network unit 12, and the 128-dimensional vector output from the sub-neural network unit 13. Then, the processing proceeds to step ST9.

In step ST9, the third affine transformation unit 33A and the fourth affine transformation unit 33B of the decoder 33 perform a decoding process. As a result of the decoding process, a mask represented by a 1025-dimensional vector is output from the fourth affine transformation unit 33B. Note that the process of step ST8 described above may be included in the decoding process of step ST9. Then, the processing proceeds to step ST10.

In step ST10, a multiplication process is performed. Specifically, the multiplication unit 4 multiplies the vector output from the feature extraction unit 2 by the mask obtained by the DNN unit 11. Then, the processing proceeds to step ST11.

In step ST11, a separated sound source signal generation process is performed. Specifically, the separated sound source signal generation unit 5 transforms a frequency spectrum obtained as a result of the operation performed by the multiplication unit 4 into a time-axis signal. Then, the processing proceeds to step ST12.

In step ST12, it is determined whether or not the input of the mixed sound signal is continuing. Such determination is performed, for example, by a central processing unit (CPU) (not illustrated) that centrally controls how the information processing device 100 operates. In a case where there is no input of the mixed sound signal (in a case of No), the processing is brought to an end. In a case where the input of the mixed sound signal is continuing (in a case of Yes), the processing returns to step ST2, and the above-described processes are repeated.

[Effects obtained by present embodiment]

An example of the effect obtained by the present embodiment described above will be described.

Since the total size of the divided vectors is 128 + 128 = 256 dimensions, it is apparently the same as before the division. It is, however, possible to reduce the number of coefficients stored in the DNN 11 and the number of multiply-accumulate operations. A specific example will be described below.

Consider, for example, vector-to-vector multiplication (matrix operation) performed by the sub-neural network unit 12 (the same applies to the sub-neural network unit 13). In a matrix operation on 256-dimensional vector input and 256-dimensional vector output, multiplication is performed $256 \times 256 = 65536$ times. On the other hand, in a case of division into two with 128 dimensions, multiplication of the 128-dimensional matrix only needs to be performed twice, so that the number of times of multiplication is $(128 \times 128) \times 2 = 32768$, which is smaller than in the case of no division. As described above, it can be seen that the use of a plurality of small matrices has merit in terms of the amount of operations as compared with the use of a large matrix. There is a plurality of matrix operations depending on the input/output vector size in the modules of the RNN unit such as the GRU or the LSTM, the configuration according to the present embodiment can effectively reduce the number of operations.

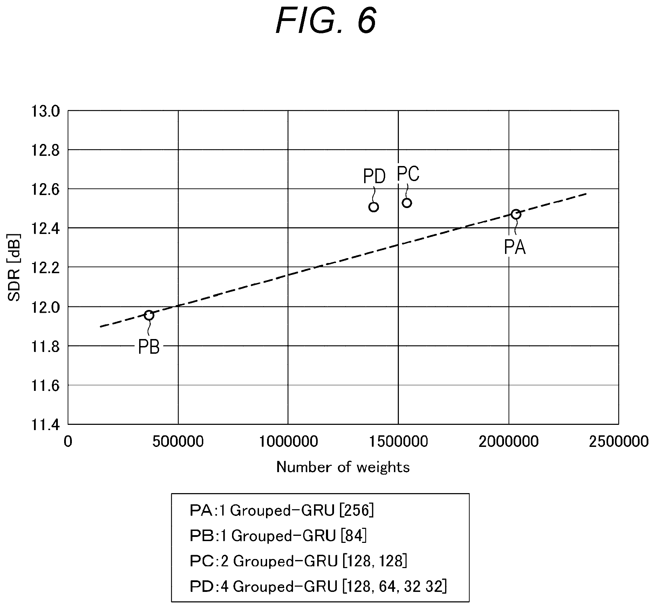

On the other hand, even if the number of operations can be reduced, it is not preferable that the accuracy of sound source separation be thereby reduced. In the present embodiment, it is, however, possible to minimize a reduction in the accuracy of sound source separation. This point will be described in detail with reference to Fig. 6.

Fig. 6 is a graph showing a relation between the number of coefficients held by the DNN unit and the sound source separation performance. The horizontal axis (number of weights) of the graph represents the number of coefficients present in the DNN unit (affine transformation unit or sub-neural network unit), and is a value roughly proportional to the number of operations and the capacity of the memory cell required for the process performed by the DNN unit. Furthermore, the vertical axis of the graph represents a signal to distortion ratio (SDR) [dB]. The SDR is an index indicating the accuracy with which the target sound source is separated, and is an index indicating that the larger the value, the higher the separation performance. Therefore, in the graph shown in Fig. 6, the closer data is plotted to the upper-left corner, the smaller the amount of used computation resources, and the higher the sound source separation performance.

Consider how the number of coefficients and the SDR change in a case where the configuration of the DNN unit is changed. As a result, as shown in Fig. 6, four plots (hereinafter, referred to as patterns PA, PB, PC, and PD as appropriate) were obtained. In this example, an example where the GRU is used as the algorithm of the RNN unit will be described, but a similar result can be obtained even in a case where another algorithm is used.

The pattern PA in Fig. 6 corresponds to a case where a typical configuration (configuration illustrated in Fig. 1) is used, and the input/output vector size for the sub-neural network unit is 256 dimensions (1 Grouped-GRU [256]). The pattern PB in Fig. 6 corresponds to a case where the typical configuration (configuration illustrated in Fig. 1) is used, and the input/output vector size for the sub-neural network unit is 84 dimensions (1 Grouped-GRU [84]). The pattern PC in Fig. 6 corresponds to a case where two sub-neural network units are used as in the configuration according to the present embodiment, and the input/output vector size for the sub-neural network units is equally divided (into 128 dimensions) (2 Grouped-GRU [128, 128]). The pattern PD in Fig. 6 corresponds to a case where four sub-neural network units are used, and the input/output vector size for the sub-neural network units are unequally divided (into 128 dimensions, 64 dimensions, 32 dimensions, and 32 dimensions) divided (4 Grouped-GRU [128, 64, 32, 32]).

In a case where the configuration and the vector size correspond to the pattern PA, the number of coefficients was approximately 2 million, and the SDR was approximately 12.4. Although the sound source separation performance is high, the number of operations increases due to the larger number of coefficients. On the other hand, in a case where the configuration and the vector size correspond to the pattern PB, that is, in a case where the vector size is reduced with the configuration of the DNN unit the same as in the case of the pattern PA, the number of coefficients was slightly less than about 500,000, thereby allowing a reduction in the number of operations. The SDR in the case of the pattern PB, however, was approximately 11.9, and the sound source separation performance deteriorated as compared with the case of the pattern PA. Therefore, the sound source separation performance deteriorates only by a simple reduction in the number of coefficients.

In a case where the configuration and the vector size correspond to the pattern PC, the number of coefficients was slightly greater than about 1.5 million. The number of coefficients was able to be reduced as compared with the pattern PA, thereby allowing a reduction in the number of operations. Moreover, the SDR in the case where the configuration and the vector size correspond to the pattern PC was slightly greater than approximately 12.5, and high sound source separation performance as compared with the pattern PA according to the typical configuration was achieved. Furthermore, in a case where the configuration and the vector size corresponding to the pattern PD, the number of coefficients was able to be reduced (to about 1.5 million or slightly less) as compared with the pattern PA, and a better SDR was also achieved. Moreover, in the case where the configuration and the vector size correspond to the pattern PD, the number of coefficients was able to be reduced as compared with the pattern PC, and almost the same SDR was also achieved. As described above, both the patterns PC and PD are located at the upper left of the line connecting the patterns PA and PB, so that it has been verified that the patterns PC and PD achieve higher sound source separation performance with a reduction in the number of operations as compared with the conventional method.

From the above, it has been verified that the information processing device according to the present embodiment can reduce the number of operations as compared with the information processing device according to the typical configuration, and can not only prevent a deterioration in the sound source separation performance but also improve the sound source separation performance.

Moreover, from the results shown in Fig. 6, it has been verified that the number of sub-neural network units is not limited to two, and the size of the vector input to each sub-neural network units may be different (may be unequally divided).

<Second embodiment>

Next, a second embodiment will be described. Note that the matters described in the first embodiment and the like are applicable to the second embodiment unless otherwise specified.

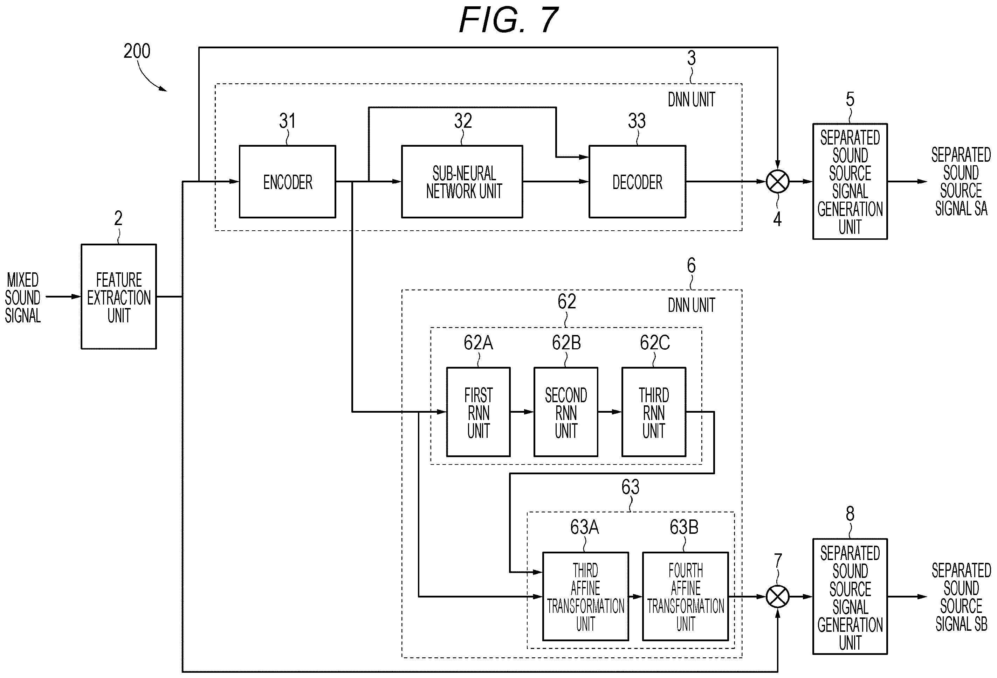

Fig. 7 is a block diagram illustrating a configuration example of an information processing device (information processing device 200) according to the second embodiment. Note that, in Fig. 7, the configuration related to the DNN unit 3 is simplified as appropriate due to a space limitation on the drawing. The information processing device 200 has the configuration related to the encoder made for shared use in a configuration corresponding to a case where there is a plurality of sound sources to be separated (for example, in the configuration of the information processing device 1B illustrated in Fig. 3).

In the information processing device 1B illustrated in Fig. 3, the encoders 31 and 61 are separately provided as encoders, but are identical to each other in the details of process of reducing the vector size (the number of dimensions in this example) of the feature vector extracted from the mixed sound signal. Therefore, as illustrated in Fig. 6, the information processing device 200 includes an encoder made for shared use among a plurality of DNN units (for example, the DNN units 3 and 6). This allows a reduction in operation load on the information processing device 200. The output from the encoder 31 is input to the sub-neural network unit 32 and the decoder 33 of the DNN unit 3 and to the sub-neural network unit 62 and the decoder 63 of the DNN unit 6. The other processing is basically the same as the processing performed by the information processing device 1B, so that redundant description will be omitted.

[Flow of processing]

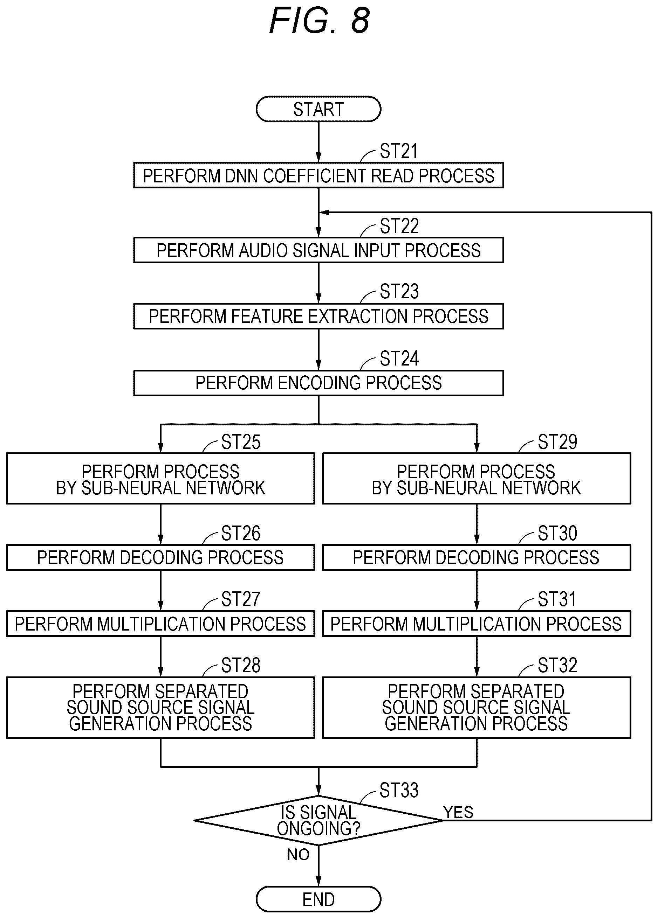

A flow of processing performed by the information processing device 200 will be described with reference to the flowchart illustrated in Fig. 8.

When the processing is started, each module constituting the DNN unit 3 reads coefficients stored in the ROM or the like (not illustrated) in step ST21. Then, the processing proceeds to step ST22.

In step ST22, the mixed sound signal is input to the information processing device 200. Then, the processing proceeds to step ST23.

In step ST23, the feature extraction unit 2 extracts a feature vector from the mixed sound signal. For example, a 1025-dimensional feature vector is input to the encoder 31 of the DNN unit 11. Then, the processing proceeds to step ST24.

In step ST24, the encoder 31, specifically, the first affine transformation unit 31A and the second affine transformation unit 31B, performs an encoding process. As a result of the process, for example, a vector having the number of dimensions reduced to 256 is output from the second affine transformation unit 31B. Such a vector is input to the sub-neural network unit 32 and the decoder 33 of the DNN unit 3 and to the sub-neural network unit 62 and the decoder 63 of the DNN unit 6. Then, the processing proceeds to step ST25 and step ST29.

The processes related to steps ST25 to ST28 include the process performed by the sub-neural network unit 32, the decoding process performed by the decoder 33, the multiplication process performed by the multiplication unit 4, and the separated sound source signal generation process performed by the separated sound source signal generation unit 5. The separated sound source signal SA is generated as a result of the separated sound source signal generation process. Furthermore, the processes related to steps ST29 to ST32 include the process performed by the sub-neural network unit 62, the decoding process performed by the decoder 63, the multiplication process performed by the multiplication unit 7, and the separated sound source signal generation process performed by the separated sound source signal generation unit 8. The separated sound source signal SB is generated as a result of the separated sound source signal generation process. The details of each process have already been described, so that redundant description will be omitted as appropriate. For the processes related to steps ST28 and ST32, the process related to step ST33 is performed.

In step ST33, it is determined whether or not the input of the mixed sound signal is continuing. Such determination is performed, for example, by a CPU (not illustrated) that centrally controls how the information processing device 200 operates. In a case where there is no input of the mixed sound signal (in a case of No), the processing is brought to an end. In a case where the input of the mixed sound signal is continuing (in a case of Yes), the processing returns to step ST22, and the above-described processes are repeated.

Note that, in the information processing device 200, the decoder and the decoder 63 may be replaced with a decoder made for shared use. Note that the decoders 33 and 63 each receive input via a sub-neural network unit having coefficients optimized for a corresponding sound source signal to be separated. It is therefore preferable that the coefficients of the decoder 33 be also optimized for a corresponding sound source signal to be separated from the viewpoint of preventing a deterioration in the sound source separation performance. It is therefore preferable that the decoder 33 and the decoder 63 be each provided for a corresponding sound source signal to be separated.

<Third embodiment>

Next, a third embodiment will be described. Note that the matters described in the first and second embodiments and the like are applicable to the third embodiment unless otherwise specified. Roughly speaking, the third embodiment has a configuration obtained by combining the first and second embodiments.

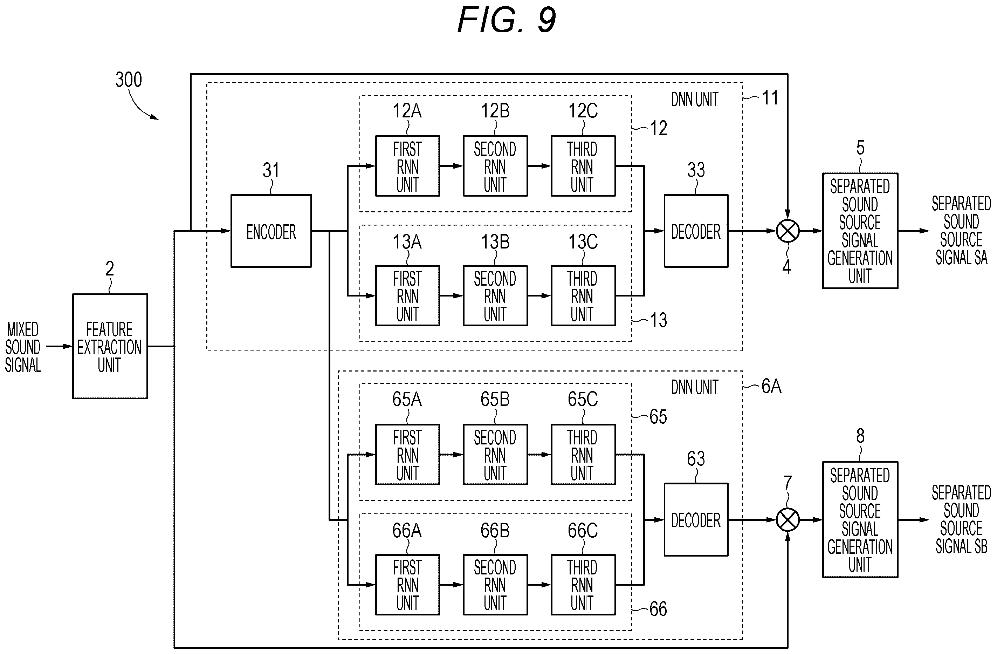

Fig. 9 is a block diagram illustrating a configuration example of an information processing device (information processing device 300) according to the third embodiment. In the information processing device 300, the DNN unit 11 described in the first embodiment is used instead of the DNN unit 3 of the information processing device 200 described above. Furthermore, in the information processing device 300, a DNN unit 6A is used instead of the DNN unit 6 of the information processing device 200 described above. The DNN unit 6A is different from the DNN unit 6 in the configuration of the sub-neural network unit. That is, the DNN unit 6A includes a plurality of sub-neural network units in a manner similar to the first embodiment. The DNN unit 6A includes, for example, a sub-neural network unit 65 and a sub-neural network unit 66. The sub-neural network unit 65 includes a first RNN unit 65A, a second RNN unit 65B, and a third RNN unit 65C. Furthermore, the sub-neural network unit 66 includes a first RNN unit 66A, a second RNN unit 66B, and a third RNN unit 66C. The DNN unit 6A includes the decoder 63 in the same manner as the DNN unit 6. The details of the processing performed by the information processing device 300 have been described in the first and second embodiments and the like, so that redundant description will be omitted. The third embodiment can obtain an effect similar to the effects obtained by the first and second embodiments.

<Summary of effects obtained by embodiments>

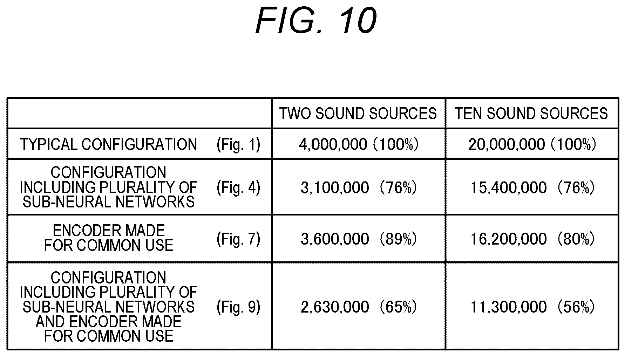

Fig. 10 shows specific numerical examples of the number of coefficients used in the DNN unit in the first to third embodiments described above. As basic configurations, four patterns of a typical configuration (see Fig. 1), a configuration including a plurality of sub-neural network units (see Fig. 4), a configuration including an encoder made for shared use (see Fig. 7), and a configuration including a plurality of sub-neural network units and an encoder made for shared use (see Fig. 9) were prepared. The number of sound sources to be separated was two or ten, and sub-neural network units were provided so as to correspond to the number of sound sources to be separated.

As shown in Fig. 10, with the typical configuration, in a case where the number of sound sources to be separated is two, the number of coefficients used in the DNN unit was approximately 4 million. Furthermore, with the typical configuration, in a case where the number of sound sources to be separated is ten, the number of coefficients used in the DNN unit was approximately 20 million. The number of coefficients used in the DNN unit in the other configurations is represented by a value relative to the number, taken as 100%, of coefficients used in the DNN unit in the typical configuration and an approximate number of coefficients. For the configuration in which the GRU algorithm is applied to each RNN unit, and a plurality of sub-neural network units is provided, a value obtained by equally dividing the input/output vector size was used.

With the configuration including a plurality of sub-neural network units, the number of coefficients used in the DNN unit was approximately 3.1 million (about 76%) in a case where the number of sound sources to be separated is two, and the number of coefficients used in the DNN unit was approximately 15.4 million (about 76%) in a case where the number of sound sources to be separated is ten. That is, the number of coefficients was able to be reduced as compared with the typical configuration. In other words, the number of operations was able to be reduced.

With the configuration including an encoder made for shared use, as the number of sound sources increased, the number of coefficients used in the DNN unit was able to be reduced. (In the case of two sound sources, the number of coefficients used in the DNN unit was approximately 3.6 million (about 76%), and in the case where the number of sound sources to be separated is ten, the number of coefficients used in the DNN unit was approximately 16.2 million (about 80%).

With the configuration including a plurality of sub-neural network units and an encoder made for shared use, the number of coefficients used in the DNN unit was able to be further reduced. (In the case of two sound sources, the number of coefficients used in the DNN unit was approximately 2.63 million (about 65%), and in the case where the number of sound sources to be separated is ten, the number of coefficients used in the DNN unit was approximately 11.3 million (about 56%).

<Modification>

Although the embodiments of the present disclosure have been described above, the present disclosure is not limited to the above-described embodiments, and various modifications can be made.

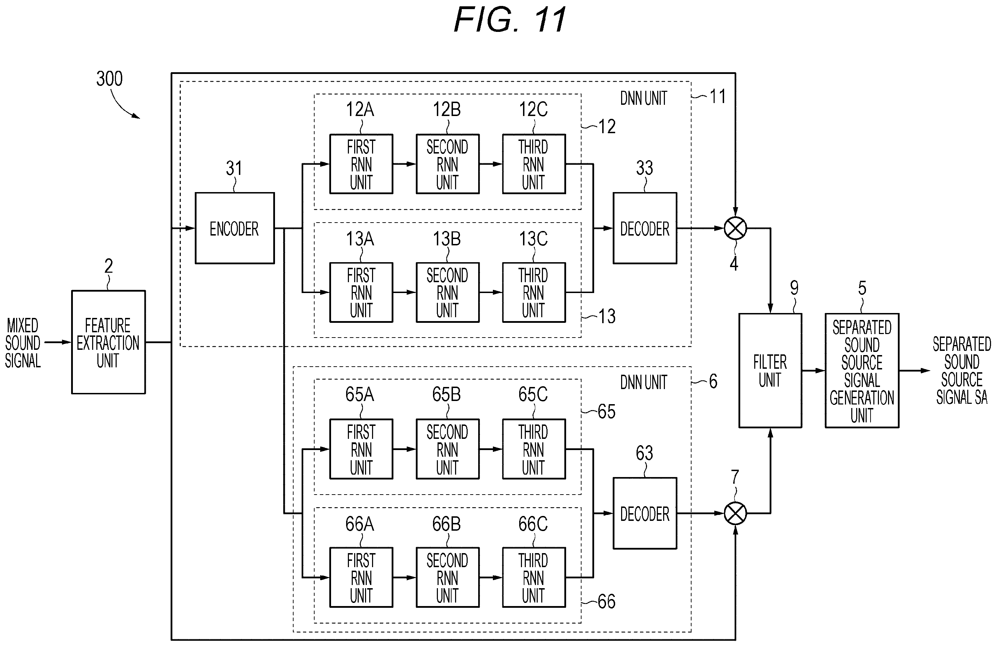

As illustrated in Fig. 11, the information processing device 300 may include a filter unit 9 (post filter) in a stage following the multiplication unit 4 and the multiplication unit 7. The filter unit 9 separates a desired sound source signal with higher accuracy using a plurality of separated sound source (in the example illustrated in Fig. 11, two sound source) signals. For example, it is assumed that a separated vocal signal is output from multiplication unit 4, and a separated piano accompaniment sound signal is output from multiplication unit 7. The filter unit 9 separates the vocal signal (an example of the separated sound source signal SA) with higher accuracy by removing a residual component (noise component) of the piano accompaniment sound signal from the vocal signal while referring to the piano accompaniment sound signal. As the filter unit 9, a known filter such as a single-channel Wiener filter can be used.

For example, the present disclosure may be configured as cloud computing in which one function is shared by a plurality of devices over a network and processing is performed in cooperation. For example, the feature extraction unit may be provided in a server device, and the feature extraction process may be performed in the server device.

Furthermore, the present disclosure can be practiced by any form such as a device, a method, a program, a recording medium recording a program, and a system. For example, enabling download of a program that performs the functions described in the above-described embodiments and causing the program to be downloaded by and installed on a device that does not have the functions described in the embodiments enables the device to perform the control described in the embodiments. The present disclosure can also be practiced by a server that distributes such a program. Furthermore, the matters described in each of the embodiments and the modification can be combined as appropriate. Furthermore, the contents of the present disclosure are not to be construed as being limited by the effects exemplified in the present specification.

REFERENCE SIGNS LIST

    2 Feature extraction unit
    4, 7 Multiplication unit
    5, 8 Separated signal generation unit
    6, 11 DNN unit
    9 Filter unit
    12, 13 Sub-neural network unit
    31 Encoder
    32 Decoder
    100, 200, 300 Information processing device

**Claims**

1.  A computer program comprising instructions which, when the program is executed by a computer causes the computer to execute an information processing method, the information processing method comprising:

generating, by a neural network unit, sound source separation information for separating a predetermined sound source signal from a mixed sound signal containing a plurality of sound source signals;

transforming, by an encoder included in the neural network unit, a feature extracted from the mixed sound signal;

inputting a process result from the encoder to each of a plurality of sub-neural network units included in the neural network unit; and

inputting the process result from the encoder and a process result from each of the plurality of sub-neural network units to a decoder included in the neural network unit,

wherein the encoder performs the transformation by reducing a size of the feature;

wherein the size of the feature is equally divided to correspond to a number of the plurality of sub-neural network units or unequally divided,

wherein, if the feature is equally divided, features with a size after the division are each input to a corresponding one of the sub-neural network units,

or if the feature is unequally divided, features with sizes after the division are each input to a corresponding one of the sub-neural network units.

2. The program according to claim 1, wherein each of the sub-neural network units includes a recurrent neural network that uses at least one of a temporally past process result or a temporally future process result for current input.

3. The program according to claim 2, wherein the recurrent neural network includes a neural network using a gated recurrent unit (GRU) or a long short term memory (LSTM) as an algorithm.

4. The program according to claim 1, wherein

the feature and the size of the feature are defined by a multidimensional vector and a number of dimensions of the vector, respectively, and the encoder reduces the number of dimensions of the vector.

5. The program according to any one of claims 1 to 4, wherein the encoder includes one or a plurality of affine transformation units.

6. The program according to any one of claims 4 or 5, wherein the decoder generates the sound source separation information on a basis of the process result from the encoder and the process result from each of the plurality of sub-neural networks.

7. The program according to any one of claims 1 to 6, wherein the decoder includes one or a plurality of affine transformation units.

8. The program according to any one of claims 1 to 7, wherein a feature extraction unit extracts the feature from the mixed sound signal.

9. The program according to any one of claims 1 to 8, wherein an operation unit multiplies the feature of the mixed sound signal by the sound source separation information output from the decoder.

10. The program according to claim 9, wherein a separated sound source signal generation unit generates the predetermined sound source signal on a basis of an operation result from the operation unit.

11. An information processing method comprising:

generating, by a neural network unit, sound source separation information for separating a predetermined sound source signal from a mixed sound signal containing a plurality of sound source signals;

transforming, by an encoder included in the neural network unit, a feature extracted from the mixed sound signal;

inputting a process result from the encoder to each of a plurality of sub-neural network units included in the neural network unit; and

inputting the process result from the encoder and a process result from each of the plurality of sub-neural network units to a decoder included in the neural network unit,

wherein the encoder performs the transformation by reducing a size of the feature;

wherein the size of the feature is unequally divided or equally divided to correspond to a number of the plurality of sub-neural network units,

wherein, if the feature is equally divided, features with a size after the division are each input to a corresponding one of the sub-neural network units,

or if the feature is unequally divided features with sizes after the division are each input to a corresponding one of the sub-neural network units.

12. An information processing device comprising a neural network unit configured to generate sound source separation information for separating a predetermined sound source signal from a mixed sound signal containing a plurality of sound source signals, wherein

the neural network unit includes:

an encoder configured to transform a feature extracted from the mixed sound signal;
a plurality of sub-neural network units configured to receive a process result from the encoder; and
a decoder configured to receive the process result from the encoder and a process result from each of the plurality of sub-neural network units,
wherein the encoder is configured to perform the transformation by reducing a size of the feature;
wherein the size of the feature is unequally divided or equally divided to correspond to a number of the plurality of sub-neural network units,
wherein, if the feature is equally divided, features with a size after the division are each input to a corresponding one of the sub-neural network units,

or if the feature is unequally divided features with sizes after the division are each input to a corresponding one of the sub-neural network units.

**Patentansprüche**

1.  Computerprogramm, umfassend Anweisungen, die, wenn das Programm durch einen Computer ausgeführt wird, den Computer veranlassen, ein Informationsverarbeitungsverfahren auszuführen, das Informationsverarbeitungsverfahren umfassend:

Erzeugen, durch eine neuronale Netzwerkeinheit, von Tonquellentrennungsinformationen zum Trennen eines zuvor bestimmten Tonquellensignals von einem gemischten Tonsignal, das eine Vielzahl von Tonquellensignalen enthält;
Transformieren, durch einen in der neuronalen Netzwerkeinheit eingeschlossenen Encoder, eines Merkmals, das aus dem gemischten Tonsignal extrahiert wird;
Eingeben eines Prozessergebnisses von dem Encoder in jede von einer Vielzahl von untergeordneten neuronalen Netzwerkeinheiten, die in der neuronalen Netzwerkeinheit eingeschlossen sind; und
Eingeben des Prozessergebnisses von dem Encoder und eines Prozessergebnisses von jeder der Vielzahl von untergeordneten neuronalen Netzwerkeinheiten in einen in der neuronalen Netzwerkeinheit eingeschlossenen Decoder,
wobei der Encoder die Transformation durch Reduzieren einer Größe des Merkmals durchführt;
wobei die Größe des Merkmals gleichmäßig aufgeteilt ist, um einer Anzahl der Vielzahl von untergeordneten neuronalen Netzwerkeinheiten zu entsprechen, oder ungleichmäßig aufgeteilt ist,
wobei, falls das Merkmal gleichmäßig aufgeteilt ist, Merkmale mit einer Größe nach der Aufteilung jeweils in eine entsprechende der untergeordneten neuronalen Netzwerkeinheiten eingegeben werden,
oder falls das Merkmal ungleichmäßig aufgeteilt ist, Merkmale mit Größen nach der Aufteilung jeweils in eine entsprechende der untergeordneten neuronalen Netzwerkeinheiten eingegeben werden.

2.  Programm nach Anspruch 1, wobei
jede der untergeordneten neuronalen Netzwerkeinheiten ein rekurrierendes neuronales Netzwerk einschließt, das für die aktuelle Eingabe mindestens eines von einem zeitlich vergangenen Prozessergebnis oder einem zeitlich zukünftigen Prozessergebnis verwendet.

3.  Programm nach Anspruch 2, wobei
das rekurrierende neuronale Netzwerk ein neuronales Netzwerk einschließt, das eine Gated Recurrent Unit (GRU) oder ein Long Short Term Memory (LSTM) als einen Algorithmus verwendet.

4.  Programm nach Anspruch 1, wobei

das Merkmal und die Größe des Merkmals durch einen mehrdimensionalen Vektor beziehungsweise eine Anzahl von Dimensionen des Vektors definiert werden, und
der Encoder die Anzahl von Dimensionen des Vektors reduziert.

5.  Programm nach einem der Ansprüche 1 bis 4, wobei der Encoder eine oder eine Vielzahl von affinen Transformationseinheiten einschließt.

6.  Programm nach einem der Ansprüche 4 oder 5, wobei
der Decoder die Tonquellentrennungsinformationen auf einer Basis des Prozessergebnisses von dem Encoder und des Prozessergebnisses von jedem der Vielzahl von untergeordneten neuronalen Netzwerken erzeugt.

7.  Programm nach einem der Ansprüche 1 bis 6, wobei der Decoder eine oder eine Vielzahl von affinen Transformationseinheiten einschließt.

8. Programm nach einem der Ansprüche 1 bis 7, wobei eine Merkmalsextraktionseinheit das Merkmal aus dem gemischten Tonsignal extrahiert.

9. Programm nach einem der Ansprüche 1 bis 8, wobei eine Operationseinheit das Merkmal des gemischten Tonsignals durch die Tonquellentrennungsinformationsausgabe von dem Decoder multipliziert.

10. Programm nach Anspruch 9, wobei
eine getrennte Tonquellensignalerzeugungseinheit das zuvor bestimmte Tonquellensignal auf einer Basis eines Operationsergebnisses von der Operationseinheit erzeugt.

11. Informationsverarbeitungsverfahren, umfassend:

Erzeugen, durch eine neuronale Netzwerkeinheit, von Tonquellentrennungsinformationen zum Trennen eines zuvor bestimmten Tonquellensignals von einem gemischten Tonsignal, das eine Vielzahl von Tonquellensignalen enthält;
Transformieren, durch einen in der neuronalen Netzwerkeinheit eingeschlossenen Encoder, eines Merkmals, das aus dem gemischten Tonsignal extrahiert wird;
Eingeben eines Prozessergebnisses von dem Encoder in jede von einer Vielzahl von untergeordneten neuronalen Netzwerkeinheiten, die in der neuronalen Netzwerkeinheit eingeschlossen sind; und
Eingeben des Prozessergebnisses von dem Encoder und eines Prozessergebnisses von jeder der Vielzahl von untergeordneten neuronalen Netzwerkeinheiten in einen in der neuronalen Netzwerkeinheit eingeschlossenen Decoder,
wobei der Encoder die Transformation durch Reduzieren einer Größe des Merkmals durchführt;
wobei die Größe des Merkmals ungleichmäßig aufgeteilt oder gleichmäßig aufgeteilt ist, um einer Anzahl der Vielzahl von untergeordneten neuronalen Netzwerkeinheiten zu entsprechen, wobei, falls das Merkmal gleichmäßig aufgeteilt ist, Merkmale mit einer Größe nach der Aufteilung jeweils in eine entsprechende der untergeordneten neuronalen Netzwerkeinheiten eingegeben werden, oder falls das Merkmal ungleichmäßig aufgeteilt ist, Merkmale mit Größen nach der Aufteilung jeweils in eine entsprechende der untergeordneten neuronalen Netzwerkeinheiten eingegeben werden.

12. Informationsverarbeitungsvorrichtung, umfassend eine neuronale Netzwerkeinheit, die konfiguriert ist, um Tonquellentrennungsinformationen zum Trennen eines zuvor bestimmten Tonquellensignals von einem gemischten Tonsignal zu erzeugen, das eine Vielzahl von Tonquellensignalen enthält, wobei die neuronale Netzwerkeinheit einschließt:

einen Encoder, der konfiguriert ist, um ein Merkmal, das aus dem gemischten Tonsignal extrahiert wird, zu transformieren;
eine Vielzahl von untergeordneten neuronalen Netzwerkeinheiten, die konfiguriert sind, um ein Prozessergebnis von dem Encoder zu empfangen; und
einen Decoder, der konfiguriert ist, um das Prozessergebnis von dem Encoder und ein Prozessergebnis von jeder der Vielzahl von untergeordneten neuronalen Netzwerkeinheiten zu empfangen,
wobei der Encoder konfiguriert ist, um die Transformation durch Reduzieren einer Größe des Merkmals durchzuführen;
wobei die Größe des Merkmals ungleichmäßig aufgeteilt oder gleichmäßig aufgeteilt ist, um einer Anzahl der Vielzahl von untergeordneten neuronalen Netzwerkeinheiten zu entsprechen, wobei, falls das Merkmal gleichmäßig aufgeteilt ist, Merkmale mit einer Größe nach der Aufteilung jeweils in eine entsprechende der untergeordneten neuronalen Netzwerkeinheiten eingegeben werden, oder falls das Merkmal ungleichmäßig aufgeteilt ist, Merkmale mit Größen nach der Aufteilung jeweils in eine entsprechende der untergeordneten neuronalen Netzwerkeinheiten eingegeben werden.

**Revendications**

1. Programme d'ordinateur comprenant des instructions qui, lorsque le programme est exécuté par un ordinateur amène l'ordinateur à exécuter un procédé de traitement d'informations, le procédé de traitement d'informations comprenant :

la génération, par une unité de réseau neuronal, d'informations de séparation de source de son permettant de séparer un signal de source de son prédéterminé d'un signal de son mélangé contenant une pluralité de signaux de source de son ;
la transformation, par un encodeur inclus dans l'unité de réseau neuronal, d'une caractéristique extraite du signal de son mélangé ;
l'entrée d'un résultat de traitement provenant de l'encodeur dans chacune parmi une pluralité de sous-unités de réseau neuronal incluses dans l'unité de réseau neuronal ; et

l'entrée du résultat de traitement provenant de l'encodeur et d'un résultat de traitement provenant de chacune parmi la pluralité de sous-unités de réseau neuronal dans un décodeur inclus dans l'unité de réseau neuronal,

dans lequel l'encodeur met en œuvre la transformation en réduisant une taille de la caractéristique ;

dans lequel la taille de la caractéristique est divisée de manière égale pour correspondre à un nombre de la pluralité de sous-unités de réseau neuronal ou divisée de manière inégale,

dans lequel, si la caractéristique est divisée de manière égale, des caractéristiques avec une taille après la division sont chacune entrées à l'une correspondante de sous-unités de réseau neuronal,

ou si la caractéristique est divisée de manière inégale, des caractéristiques avec des tailles après la division sont chacune entrées à une correspondante des sous-unités de réseau neuronal.

2.  Programme selon la revendication 1, dans lequel chacune des sous-unités de réseau neuronal comporte un réseau neuronal récurrent qui utilise au moins l'un parmi un résultat de traitement temporellement antérieur ou un résultat de traitement temporellement futur pour l'entrée actuelle.

3.  Programme selon la revendication 2, dans lequel le réseau neuronal récurrent comporte un réseau neuronal utilisant une unité récurrente à grille (GRU) ou une mémoire longue à court terme (LSTM) en guise d'algorithme.

4.  Programme selon la revendication 1, dans lequel

la caractéristique et la taille de la caractéristique sont définies par un vecteur multidimensionnel et un nombre de dimensions du vecteur, respectivement, et

l'encodeur réduit le nombre de dimensions du vecteur.

5.  Programme selon l'une quelconque des revendications 1 à 4, dans lequel l'encodeur comporte une ou une pluralité d'unités de transformation affine.

6.  Programme selon l'une quelconque des revendications 4 ou 5, dans lequel le décodeur génère les informations de séparation de source de son en fonction du résultat de traitement provenant de l'encodeur et du résultat de traitement provenant de chacun parmi la pluralité de sous-réseaux neuronaux.

7.  Programme selon l'une quelconque des revendications 1 à 6, dans lequel le décodeur comporte une ou une pluralité d'unités de transformation affine.

8.  Programme selon l'une quelconque des revendications 1 à 7, dans lequel une unité d'extraction de caractéristique extrait la caractéristique du signal de son mélangé.

9.  Programme selon l'une quelconque des revendications 1 à 8, dans lequel une unité d'opération multiplie la caractéristique du signal de son mélangé par les informations de séparation de source de son délivrées en sortie par le décodeur.

10. Programme selon la revendication 9, dans lequel une unité de génération de signal de source de son séparée génère le signal de source de son prédéterminé en fonction d'un résultat d'opération provenant de l'unité d'opération.

11. Procédé de traitement d'informations comprenant :

la génération, par une unité de réseau neuronal, d'informations de séparation de source de son permettant de séparer un signal de source de son prédéterminé d'un signal de son mélangé contenant une pluralité de signaux de source de son ;

la transformation, par un encodeur inclus dans l'unité de réseau neuronal, d'une caractéristique extraite du signal de son mélangé ;

l'entrée d'un résultat de traitement provenant de l'encodeur dans chacune parmi une pluralité de sous-unités de réseau neuronal incluses dans l'unité de réseau neuronal ; et

l'entrée du résultat de traitement provenant de l'encodeur et d'un résultat de traitement provenant de chacune parmi la pluralité de sous-unités de réseau neuronal dans un décodeur inclus dans l'unité de réseau neuronal,

dans lequel l'encodeur met en œuvre la transformation en réduisant une taille de la caractéristique ;

dans lequel la taille de la caractéristique est divisée de manière inégale ou divisée de manière égale pour correspondre à un nombre de la pluralité de sous-unités de réseau neuronal,

dans lequel, si la caractéristique est divisée de manière égale, des caractéristiques avec une taille après la division sont chacune entrées à une correspondante des sous-unités de réseau neuronal, ou si la caractéristique est divisée de manière inégale des caractéristiques avec des tailles après la division sont chacune entrées à une correspondante des sous-unités de réseau neuronal.

12. Dispositif de traitement d'informations comprenant une unité de réseau neuronal configurée pour générer des informations de séparation de source de son permettant de séparer un signal de source de son prédéterminé d'un signal de son mélangé contenant une pluralité de signaux de source de son, dans lequel

l'unité de réseau neuronal comporte :

un encodeur configuré pour transformer une caractéristique extraite du signal de son mélangé ;

une pluralité de sous-unités de réseau neuronal configurées pour recevoir un résultat de traitement provenant de l'encodeur ; et

un décodeur configuré pour recevoir le résultat de traitement provenant de l'encodeur et un résultat de traitement provenant de chacune parmi la pluralité de sous-unités de réseau neuronal,

dans lequel l'encodeur est configuré pour mettre en œuvre la transformation en réduisant une taille de la caractéristique ;

dans lequel la taille de la caractéristique est divisée de manière inégale ou divisée de manière égale pour correspondre à un nombre de la pluralité de sous-unités de réseau neuronal,

dans lequel, si la caractéristique est divisée de manière égale, des caractéristiques avec une taille après la division sont chacune entrées à une correspondante des sous-unités de réseau neuronal,

ou si la caractéristique est divisée de manière inégale des caractéristiques avec des tailles après la division sont chacune entrées à une correspondante des sous-unités de réseau neuronal.

## FIG. 1

1A

**3 DNN UNIT**

**2**
MIXED SOUND SIGNAL → FEATURE EXTRACTION UNIT

**31**
- **31A** FIRST AFFINE TRANSFORMATION UNIT
- **31B** SECOND AFFINE TRANSFORMATION UNIT

**32**
- **32A** FIRST RNN UNIT
- **32B** SECOND RNN UNIT
- **32C** THIRD RNN UNIT

**33**
- **33A** THIRD AFFINE TRANSFORMATION UNIT
- **33B** FOURTH AFFINE TRANSFORMATION UNIT

**4**

**5** SEPARATED SOUND SOURCE SIGNAL GENERATION UNIT → SEPARATED SOUND SOURCE SIGNAL SA

# FIG. 2

| MODULE NAME | INPUT VECTOR SIZE | OUTPUT VECTOR SIZE |
|---|---|---|
| FIRST AFFINE TRANSFORMATION UNIT | 1025 | 256 |
| SECOND AFFINE TRANSFORMATION UNIT | 256 | 256 |
| FIRST RNN UNIT | 256 | 256 |
| SECOND RNN UNIT | 256 | 256 |
| THIRD RNN UNIT | 256 | 256 |
| THIRD AFFINE TRANSFORMATION UNIT | 512 | 256 |
| FOURTH AFFINE TRANSFORMATION UNIT | 256 | 1025 |

## FIG. 3

EP 4 365 897 B1

*FIG. 4*

# FIG. 5

START

↓

PERFORM DNN COEFFICIENT READ PROCESS — ST1

↓

PERFORM MIXED SOUND SIGNAL INPUT PROCESS — ST2

↓

PERFORM FEATURE EXTRACTION PROCESS — ST3

↓

PERFORM ENCODING PROCESS — ST4

↓

PERFORM PROCESS OF DIVIDING THE NUMBER OF DIMENSIONS OF FEATURE VECTOR — ST5

↓

PERFORM PROCESS BY ONE SUB-NEURAL NETWORK UNIT — ST6    PERFORM PROCESS BY OTHER SUB-NEURAL NETWORK UNIT — ST7

↓

PERFORM PROCESS OF CONNECTING VECTORS — ST8

↓

PERFORM DECODING PROCESS — ST9

↓

PERFORM MULTIPLICATION PROCESS — ST10

↓

PERFORM SEPARATED SOUND SOURCE SIGNAL GENERATION PROCESS — ST11

↓

IS SIGNAL ONGOING? — ST12    Yes

No

↓

END

## FIG. 6

PA:1 Grouped-GRU [256]
PB:1 Grouped-GRU [84]
PC:2 Grouped-GRU [128, 128]
PD:4 Grouped-GRU [128, 64, 32 32]

*FIG. 7*

# FIG. 8

```
                        START
                          │
                          ▼           ST21
        ┌─────────────────────────────────────────┐
        │  PERFORM DNN COEFFICIENT READ PROCESS    │
        └─────────────────────────────────────────┘
                          │                              ◄──────┐
                          ▼           ST22                      │
        ┌─────────────────────────────────────────┐            │
        │     PERFORM AUDIO SIGNAL INPUT PROCESS   │            │
        └─────────────────────────────────────────┘            │
                          │                                     │
                          ▼           ST23                      │
        ┌─────────────────────────────────────────┐            │
        │    PERFORM FEATURE EXTRACTION PROCESS    │            │
        └─────────────────────────────────────────┘            │
                          │                                     │
                          ▼           ST24                      │
        ┌─────────────────────────────────────────┐            │
        │          PERFORM ENCODING PROCESS        │            │
        └─────────────────────────────────────────┘            │
             │                              │                   │
             ▼           ST25               ▼           ST29    │
   ┌──────────────────────┐      ┌──────────────────────┐      │
   │  PERFORM PROCESS     │      │  PERFORM PROCESS     │      │
   │ BY SUB-NEURAL NETWORK│      │ BY SUB-NEURAL NETWORK│      │
   └──────────────────────┘      └──────────────────────┘      │
             │           ST26              │           ST30     │
             ▼                             ▼                    │
   ┌──────────────────────┐      ┌──────────────────────┐      │
   │PERFORM DECODING      │      │PERFORM DECODING      │      │
   │PROCESS               │      │PROCESS               │      │
   └──────────────────────┘      └──────────────────────┘      │
             │           ST27              │           ST31     │
             ▼                             ▼                    │
   ┌──────────────────────┐      ┌──────────────────────┐      │
   │PERFORM MULTIPLICATION│      │PERFORM MULTIPLICATION│      │
   │PROCESS               │      │PROCESS               │      │
   └──────────────────────┘      └──────────────────────┘      │
             │           ST28              │           ST32     │
             ▼                             ▼                    │
   ┌──────────────────────┐      ┌──────────────────────┐      │
   │ PERFORM SEPARATED    │      │ PERFORM SEPARATED    │      │
   │ SOUND SOURCE SIGNAL  │      │ SOUND SOURCE SIGNAL  │      │
   │ GENERATION PROCESS   │      │ GENERATION PROCESS   │      │
   └──────────────────────┘      └──────────────────────┘      │
             │                             │                    │
             └──────────────┬──────────────┘                   │
                            ▼           ST33                    │
                        ╱IS SIGNAL ╲          YES               │
                       ╱ ONGOING?   ╲ ───────────────────────────
                        ╲          ╱
                          NO
                          ▼
                        END
```

FIG. 9

# FIG. 10

|  |  | TWO SOUND SOURCES | TEN SOUND SOURCES |
|---|---|---|---|
| TYPICAL CONFIGURATION | (Fig. 1) | 4,000,000 (100%) | 20,000,000 (100%) |
| CONFIGURATION INCLUDING PLURALITY OF SUB-NEURAL NETWORKS | (Fig. 4) | 3,100,000 (76%) | 15,400,000 (76%) |
| ENCODER MADE FOR COMMON USE | (Fig. 7) | 3,600,000 (89%) | 16,200,000 (80%) |
| CONFIGURATION INCLUDING PLURALITY OF SUB-NEURAL NETWORKS AND ENCODER MADE FOR COMMON USE | (Fig. 9) | 2,630,000 (65%) | 11,300,000 (56%) |

# FIG. 11

**EP 4 365 897 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018047643 A

**Non-patent literature cited in the description**

- **SAWATA et al.** *ALL FOR ONE AND ONE FOR ALL: IMPROVING MUSIC SEPARATION BY BRIDING NETWORKS*